# EUROPEAN PATENT SPECIFICATION

(11) **EP 2 457 831 B1**
(45) Date of publication and mention of the grant of the patent: **10.03.2021**
(21) Application number: 11190409.0
(22) Date of filing: 23.11.2011
(51) Int. Cl.: B64D 11/00, B64D 11/06

(54) **Improvements in and relating to interior trim components for aircraft cabins**
Verbesserungen von und in Bezug auf Verkleidungsteile von Flugzeugkabinen
Améliorations de et associées aux composants de garniture intérieure pour cabines d'avion

(30) Priority: 25.11.2010 GB 201020018
(43) Date of publication of application: 30.05.2012
(73) Proprietor: MGR Foamtex Limited, Thame, Oxfordshire OX9 3SZ (GB)
(72) Inventor: Simpson, Leslie James, Wendover, Buckinghamshire HP22 6EQ (GB)
(74) Representative: Willett, Christopher David

(56) References cited:
- EP-A2- 1 000 856
- GB-A- 2 466 329
- US-A- 5 080 431
- US-A1- 2005 005 544
- US-A1- 2012 305 706

## Description

### Field of the invention

This invention relates to a passenger aircraft having an interior cabin which includes a particular soft interior trim component.

### Background of the invention

Passenger aircraft interiors have to comply with very stringent flammability standards relating to all components manufactured for and installed in an aircraft. Thus, for example, vertical walls or large panels such as bulkheads, dividers, galley walls and lavatory walls have to meet FAA and EASA regulations concerning acceptable levels of heat release, smoke emission and generation of toxic fumes, when exposed to heat, to aid safe and speedy evacuation of the aircraft in an emergency. To that end, vertical walls and large panels are typically made from composite boards with a decorative laminate glued on during manufacture.

As the laminate surface is non-porous, dirt can be easily wiped off, but any repair or replacement requires aircraft down time in a hanger and therefore needs to be carried out at a major maintenance check. Sometimes, soft materials, for examples a tapestry, are used but these tend to be located in non-passenger areas at the forward part of the cabin.

Typically, many of the surfaces around an aircraft seat, other than the seat cushions and arm rests, are unyielding and non-permeable. This facilitates cleaning, but can be detrimental to passenger comfort. The advent of lie flat beds in first and business class premium cabins has led to a demand for more soft surfaces to be used in the cabins to improve the passenger experience during flight. This is especially important during night time flying where a passenger lying on a lie flat bed may come into contact with surfaces, such as a headboard, partition or side wall in close proximity to the seat cushions/mattress on which the passenger is lying. It is felt that the use of such soft surfaces improve the passenger experience during flight.

One known approach to providing a soft cover for hard interior surfaces of an aircraft is to bond to the surface a closed cell fluoropolymer foam which itself carries a decorative outer cover.

However, this approach is not practicable for surfaces, such as those around the seat cushions/mattress which frequently come into contact with passengers since those surfaces would require frequent cleaning, and this would be unduly time consuming and expensive Document US2005/0005544 describes an insulated wall for a mobile platform formed from at least two layers. A first layer includes an insulation material. A second layer includes a flexible material having an outer face with a decorative pattern and an inner face attached to the first layer. The wall is mounted in the mobile platform with the outer face of the second layer having the decorative pattern forming a mobile platform innermost facing surface. By attaching a flexible material layer to the insulation material, the insulated wall can be formed into rolls and rolled out during installation in a single step. In another embodiment, fasteners are preinstalled in the wall for fastening the wall to the mobile platform. EP1 000 856 A2 describes an aircraft seat having a frame assembly onto which is attached a shaped front cover by means of clips, each having a socket component and a plug component. The plug and socket components are repeatedly engageable and disengageable, enabling the front cover to be repeatedly removed from and refitted to the frame assembly, for example for cleaning of the front cover. The clips ensure accurate and precise fitting and location of the seat cover with respect to the frame assembly. UK 2466329 describes a seat cushion for an aircraft ejection seat including a plurality of rear edge securing straps attached to the lower surface of the seat cushion. The rear edge securing straps each have a free end that includes a pull-the-dot fastener that engages a corresponding pull-the-dot fastener at the rear edge of the seat pan. A plurality of front edge securing straps are fixed, at one end, to the seat pan near its rear edge and have free ends that pass through bight portions of front edge straps to be secured by fastenings at the front of the pan. The length of the rear edge securing straps is selected so that when the seat cushion is installed, the rear edge securing straps are pulled substantially flat so that the seat cushion is firmly held in place. When the front edge of the seat cushion is released, the seat cushion can be lifted up enough to allow the cushion to be released without pulling at the bottom of the seat cushion.

### Summary of the invention

According to a first aspect of the invention, there is provided a passenger aircraft according to claim 1.

The attachment means allows the component readily to be removed once worn or soiled, and replaced with a similar new, or cleaned, trim component.

The touch and close fastening means enables the component to be attached simply by pressing it against the surface to be covered, while the component is correctly positioned relative to that surface.

Such attachment means may conveniently comprise a pressure sensitive adhesive surface.

Such an adhesive surface may be fixed to the surface to be covered, but is preferably mounted directly, or indirectly on the back of the foam layer, so as to remain with the rest of the component when the latter is being removed.

Preferably, the adhesive surface is one side of a double sided adhesive tape.

Preferably, the foam layer includes a recess for at least partially accommodating the tape.

This helps to ensure that, with the trim component installed, a passenger could not feel the tape through the front of the component, and/or that the tape does not produce any obvious ridge in the front of the component.

Preferably, the fastening element is one of a plurality of such elements.

With such an attachment means, the fastening elements can provide a fail safe for the adhesive surface.

The fastening element can also be used to facilitate the correct positioning of the component, by aligning each protuberance with its respective female connector portion.

The fastening elements may conveniently comprise clips or plugs, preferably fir tree clips.

Preferably, the foam layer includes a recess for accommodating the inboard ends of the fasteners.

This helps to ensure that fasteners do not distort the front of the component.

Preferably, the foam layer is exposed at the back of the trim component.

This simplifies construction and reduces material costs of the component.

Preferably, the panel comprises a headboard for a passenger seat and the trim component comprises a cover for the headboard.

Preferably, the foam layer is no more than 6 mm thick

Examples of the latter type of foam are described in WO 2005/105907. The foam is preferably the ZOTEK® F fluoropolymer foam or any substantially similar foam, with substantially similar characteristics, made by Zotefoams.

Where the fastening elements on the component comprise protuberances, the corresponding elements may to advantage comprise apertures in the surface or structure to be covered.

### Brief description of the drawings

The invention will now be described, by way of example only, with reference to the accompanying drawings in which:
Figure 1 is a perspective view of a "lie flat" seat of a passenger aircraft cabin having a structure, in the vicinity of the seat cushions, which can be covered by a soft interior trim component in accordance with the invention;
Figure 2 shows the upper part of a "lie flat" seat having a headboard fitted with a trim component in accordance with the invention;
Figure 3 shows the trim component, prior to attachment to the headboard, from behind;
Figure 4 is a close up view of the trim component which is on the headboard, but which is partially peeled back to illustrate how the component is attached to the headboard;
Figure 5 is an exploded isometric view of a wall panel and another trim component in accordance with the invention; and
Figure 6 is a more detailed view of the arrangement in Figure 5, showing how the trim component is attached to the wall panel.

### Detailed description of the drawings

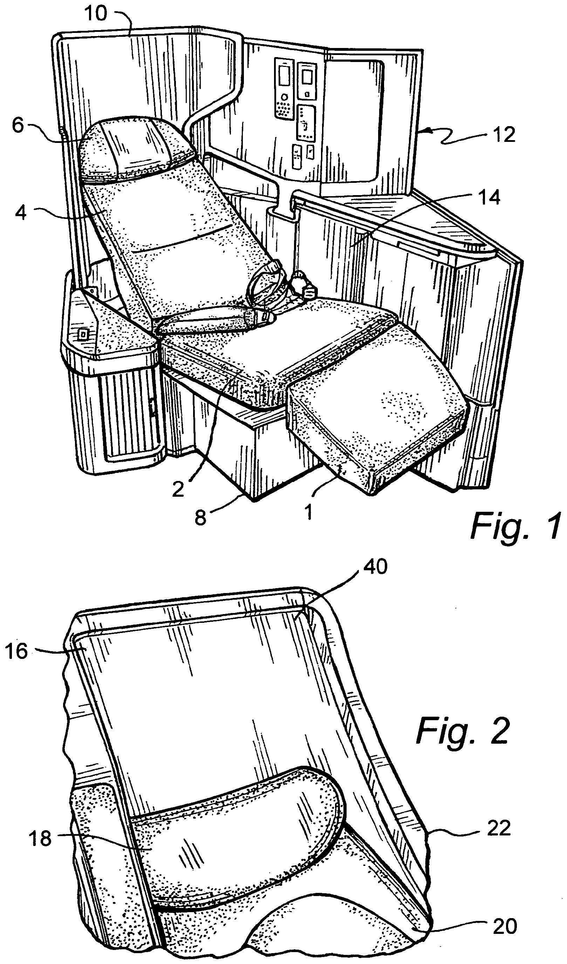

The seat shown in Figure 1 has a number of cushioned portions which, in use, support a passenger. More specifically, the seat has a foot rest portion 1 pivotally connected to the seat portion 2 which is in turn pivotally connected to a back rest portion 4 at the top of which there is provided a head rest 6. The seat is mounted on a support 8 that houses motors (not shown) for pivoting the portions relative to each other and for sliding the pivotal axes between the portions 1 and 2 and the portions 2 and 4 backwards and forwards so that the seat can be moved from a fully upright position, to a partially reclined position, as shown in Figure 1 and subsequently into a fully reclined position, in which the portions 4, 2 and 1 are substantially aligned with each other and are horizontal or almost horizontal. In the latter position, the cushions of the portions 1, 2, 4 and 6 act as a mattress on which a passenger can sleep.

Typically, lie flat seats in premium class cabins are surrounded by various different types of structure which can help to provide a degree of privacy for the passenger. In the arrangement shown in Figure 1, a headboard 10 extends behind the backrest 4 and headrest 6 and there is provided a dividing structure, generally referenced 12, which provides some seclusion from the neighbouring seat, and which also provides storage for various items for example a video display and/or certain controls that the passenger might wish to operate during the flight. This structure also includes a side wall 14 immediately adjacent to the seat portion 2 and backrest 4.

During a long flight, parts of the passenger's body may well rest against the headboard 10 or side wall 14, especially if the seat is in its lie flat configuration. If those surfaces are hard, or cold, they may therefore detract from the passenger's comfort during the flight. It is therefore desirable for headboard 10 and side wall 14 in particular, to be provided with a soft cover, and to that end a cabin trim component in accordance with the invention may to advantage be used.

In Figure 2, such a component is shown at 16, and is being used as a cover for the headboard for a seat, the headrest and backrest of which are shown at 18 and 20. As can be seen from Figure 2, this particular seat includes a pod-like structure 22 around the backrest 20 and headrest 18, the headboard being formed by the interior surface of that structure, and the cover is shaped to extend across the top of the headboard and to curve around, with the headboard, so as to extend along the portions of the structure 22 which will be beside the headrest 18 when the seat is reclined.

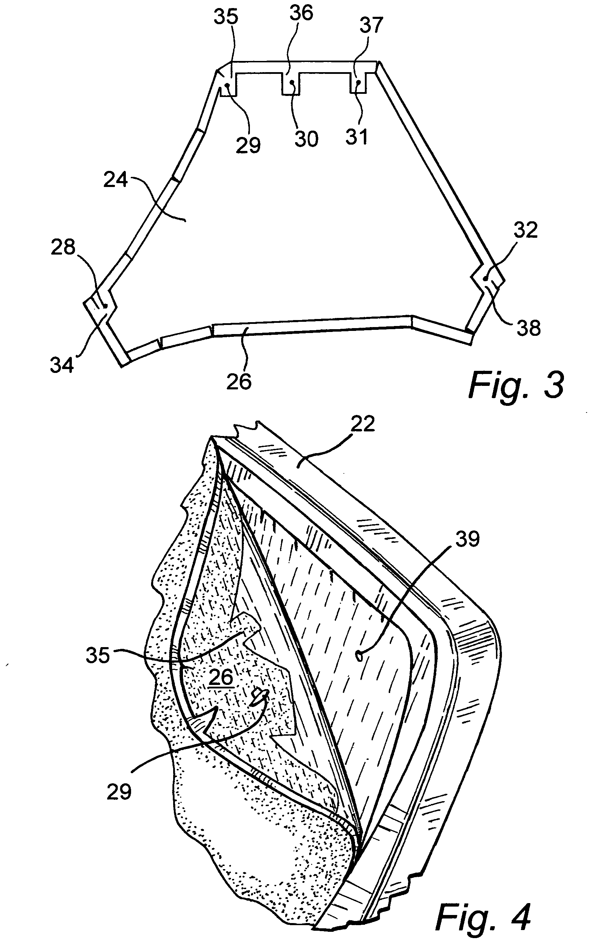

The shape that the trim component has in order to provide this coverage is best appreciated from Figure 3. The trim component comprises a foam layer in the form of a 6 mm thick panel of a closed cell fluoropolymer foam in accordance with any of the examples of foam described in WO 2005/105907. Alternatively the foam may be of the type currently sold under the trade name ZOTEK® F OSU Flexible by Zotefoams® Plc. Details of this foam are set out in Appendix 1 hereto.

A recess is machined into the perimeter of the rear of the foam panel 24 so as to accommodate a number of substantially contiguous sections of FR double sided, pressure sensitive adhesive tape 26. In the present example the tape is Permacel™ P55 double sided tape, information on which is set out in Appendix 2 hereto.

The back of the foam panel 24 also includes a number of recesses, each of which accommodates the head of a respective one of five fir tree clips 28-32. Each of the fir tree clips extends through an aperture in a respective patch of adhesive tape (the patches being denoted by reference numerals 34-38) the heads of the fir tree clips (the inboard ends of the clips) which extend into the corresponding recesses in the back of the foam panel, are held against the panel by the tape patches which, consequently, retain the clips in position on the panel. The tape constituting the patches in this example is Glass Cloth Tape, such as 3M™ 399FR tape. Such tape has an acrylic adhesive for many applications requiring high adhesion, an abrasion-resistant backing and flame retardant properties. This product is typically used for sealing aircraft cargo bay panels to provide a permanent seal.

The headboard is provided with a series of apertures (which may be drilled into the headboard or take the form of a preformed receptacle), each of which receives a respective one of the fir tree clips. The front of the component 16 includes a decorative cover 40 bonded to the front of the foam panel 24. The cover extends over the edge of the foam panel to form a hem, as can be seen from Figure 4, and the portion that extends over the edge is bonded to the back of the foam panel at the recess which accommodates the tape 26. The tape 26 therefore, at least in part, is adhered to that portion of the cover.

One of the apertures in the headboard, which corresponds to clip 29, is shown at 39 in Figure 4.

The decorative cover is formed from one of a range of approved decorative materials that meet the requirements of:
FAR/JAR/CS 25.853 (a) Appendix F, Part I a(1) i 60 Sec Vertical
FAR/JAR/CS 25.853 (a) Appendix F, Part I a(1) ii12 Second Vertical tests
FAR/JAR/CS 25.853 (d) Appendix F, Part IV Heat Release
FAR/JAR/CS 25.853 (d) Appendix F, Part V Smoke Emission

The foam panel is then cut to shape and recesses for the tape and the heads of the clips are then machined, and then the decorative covering 40 is bonded to the foam panel and edge sealed. The double sided tape is in position around the outer edge/periphery of the panel and the clips bonded into place.

The cover 40 is bonded to the foam panel 24 using a water dispersed, high solid, contact adhesive, for example Fastbond™ contact adhesive 2000-NF produced by 3M®. The adhesive is sprayed onto the foam or the back of the cover 24 and the latter is then pressed in place on the foam panel 24.

When the panel is to be fitted, it is first positioned in front of the headboard with the clips in register with their corresponding apertures in the headboard. The component is then pressed into place so that the clips enter into and engage the apertures and the double sided tape 26 adheres the component to the headboard about the edges of the component. In the arrangement shown in Figure 4, the headboard already carries an underlying foam layer 42 (bonded thereto), although it will be appreciated that it is within the scope of the invention for the surface to which the component is presented to be hard.

In use, the trim component will frequently come into contact with passengers and after a period of time will therefore become worn and/or soiled. The attachment means provided by the adhesive tape and fir tree clips enables soiled/worn panels to be rapidly removed and replaced with fresh or new panels. The soiled/worn panels may be disposed of, or (in the case of light soiling) taken for subsequent cleaning and reuse.

The double sided tape 26 may include a backing strip which covers the rearward facing adhesive surface of the tape to protect the latter prior to the installation of the component. In this case, of course, the backing tape is removed before the component is installed.

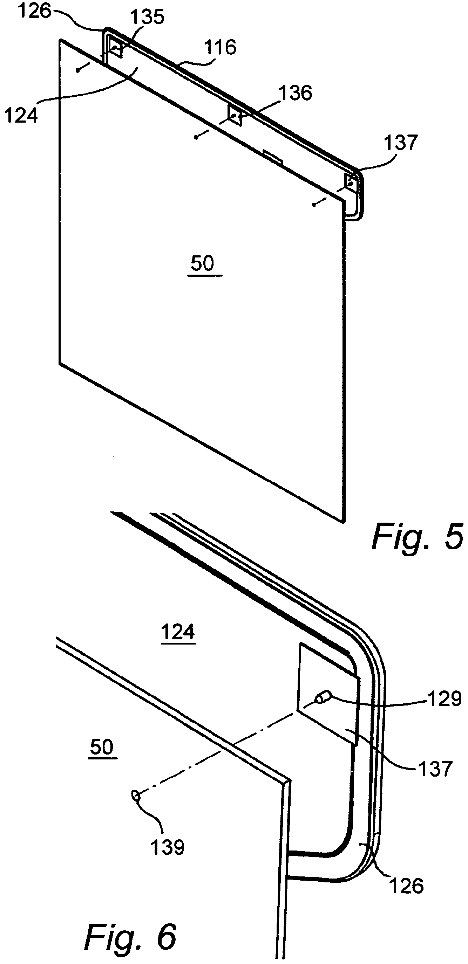

Figures 5 and 6 show a similar type of component, and therefore the features that correspond to those of the component of Figures 2-4 are shown by the same reference numerals, raised by 100. In this particular case, the component is for use in covering a flat side wall panel 50. Thus the component has the same structure as the component 16, and only differs in respect of its shape and dimensions, which are chosen to enable the component to be appropriately fitted to the side wall panel 50.

It will be appreciated that the invention is applicable to any soft trim component for an aircraft cabin, and that the type and nature of foam chosen for the panel may vary depending on the requirement for the component. Thus, for example, in some instances the foam may be of the type currently sold as ZOTEK® F OSU semi-rigid. Details of this foam are set out in Appendix 3 hereto.

### Appendix 1

| |
|---|
| ZOTEK® High performance foams |
| ZOTEK®F OSU Flexible PVDF FOAMS |

ZOTEK® F OSU flexible is closed cell foam of density 33 kg/m³ (1.9 pcf) made from KYNAR®PVDF (poly vinylidene fluoride) available in 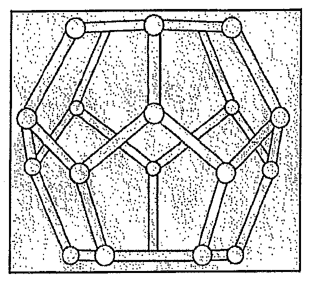 sheet form. ZOTEK® F OSU grades meet FAR 25.853(d) and exhibit exceptionally low heat release (OSU). This grade is ideal for interior soft trim in combination with leathers, textiles and decorative laminates and can be thermoformed Into simple and complex shapes. This datasheet provides typical values for the foam and does not constitute a specification.

| Property | Test Method | Units | Typical Value |
|---|---|---|---|
| Density | ISO 845 | Kg m⁻³ (pcf) | 33(2.1) |
| Max. Operating temperature | Internal | °C(°F) | 110(230) |
| Compression stress-strain characteristics 25% compression | ISO 7214 (1^{st} compression) | kPa (psi) | < 60 kPa (< 8.7) |
| Tensile strength Elongation | ISO 1798 | kPa (psi) % | >245 (.>35.5) >88 |
| Compression set 22 hrs @ 50% compression,23°C (73°F), ½ hr recovery | ISO 7214/ASTM D35751 25mm (1") cell-cell | %set | <17 |

| Thermal conductivity | | | |
|---|---|---|---|
| Mean temperature of 0°C(32°F) | ISO 8301 | W m⁻¹K⁻¹(Btu in/ft².hr.°F) | 0.033 (0.226) |
| Mean temperature of 40°C(104°F) | DIN 52 612 | W m⁻¹K⁻¹ (Btu in/ft².hr.°F) | 0.038 (0.266) |
| Mean temperature of 80°C(176°F) | ASTM C 518 | W m⁻¹K⁻¹ (Btu in/ft².hr.°F) | 0.046 (0.316) |

| Flammability | | | |
|---|---|---|---|
| Heat Release | FAR/CS 25.853 (d) App F Pt IV | 2 min. total HR (kWmin/m²): 39.9 at 25 mm (at 1") Peak HR (kW/m²): 49.1 at 25 mm (1") | |
| Smoke Density | FAR/CS 25.853 (d) App F Pt V | Pass at 3 mm (1/8") and 13 mm (1/2") | |
| Smoke Density | ABD0031 para.7.3.2 | Pass at 3 mm (1/8") and 13 mm (1/2") | |
| Toxic Gas Emission | ABD0031 para.7.4 | Pass at 3 mm (1/8") and 13 mm (1/2") | |
| Vertical Bunsen Burner | FAR/CS 25.853(a) App F Pt I (a), (1), (II) | Pass at 3 mm (1/8") and 13 mm (1/2") | |
| Radiant Heat Panel | FAR 25.856 (a) App F Pt VI | Pass at 3 mm (1/8"), 13 mm (1/2"), 25 mm (1") | |
| Water Vapour Transmission | ISO 1663 | µm⁻² s⁻¹ (µg/m²s) | 172 |
| Permeability to Water Vapour | ISO 1663 | ng m⁻¹ s⁻¹ (Pa-1 ng/m s | 0.78 |
| Water Absorption | ISO 2898 | Pa) | 0.06 |
| Water Absorption | ASTM 1056 | % | 2.2 |

| | | | |
|---|---|---|---|
| **OSU: The Ohio State University test method to determine the total and release rate of heat from materials, products, or assemblies during combustion* | | | |

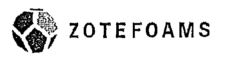

Date of Issue: May 2010

### NOTES

### MAXIMUM OPERATING TEMPERATURE

The Maximum Operating Temperature is defined as that temperature which will typically cause a linear shrinkage of 5% after a 24 hr exposure period, using a sample of 100 x 100 x 25mm (4" x 4" x 1").

The degree of shrinkage varies with material type and density, temperature, exposure period, sample dimensions and cell size. Other temperatures may prove to be limiting depending on the particular application requirements.

### CHEMICAL RESISTANCE

General guidelines for chemical resistance of PVDF resins are that they exhibit excellent resistance to a wide range of chemicals. They are resistant to attack from most inorganic acids and alkalis, aliphatic and aromatic hydrocarbons, organic acids, alcohols and halogenated solvents, However, they are susceptible to attack from strong alkalis (i.e. pH >12) and strongly polar solvents (e.g. acetone, ethyl acetate, dimethylformamide, dimethylacetamide).Foam performance may be slightly inferior to solid performance but will be a relative effect.

### WEATHERING RESISTANCE

ZOTEK® F OSU flexible has exceptional UV resistance. Accelerated ageing by exposure to Intense UV light using Xenon Arc Lamp test equipment, a widely used accelerated weathering test based on ISO 105-B02, showed no loss of strength after 2000 hours exposure.

### EXCLUSION OF LIABILITY

Any information contained in this document is, to the best of the knowledge and belief of Zotefoams plc and of Zotefoams Inc. (together herein referred to as ZOTEFOAMS), accurate. Any liability on the part of ZOTEFOAMS or any subsidiary or holding company of ZOTEFOAMS for any loss, damage, costs or expenses directly or indirectly arising out of the use of such information or the use, application, adaptation or processing of any goods, materials or products described herein is, save as provided in ZOTEFOAMS' conditions of sale ("Conditions of Sale"), hereby excluded to the fullest extent permitted by law.

Where ZOTEFOAMS' goods or materials are to be used in conjunction with other goods or materials, it is the responsibility of the user to obtain from the manufacturers or suppliers of the other goods or materials all technical data and other properties relating to those other goods or materials. Save as provided in the Conditions of Sale no liability can be accepted in respect of the use of ZOTEFOAMS' goods or materials in conjunction with any other goods or materials.

Where ZOTEFOAMS' goods or materials are likely to come into contact with foodstuffs or pharmaceuticals, whether directly or indirectly, or are likely to be used in the manufacture of toys, prior written confirmation of compliance with relevant legislative or regulatory standards for those applications may be requested from ZOTEFOAMS, if appropriate. Save as provided in the Conditions of Sale no liability can be accepted for any damage, loss or injury directly or indirectly arising out of any failure by the user to obtain such confirmation or to observe any recommendations given by or on behalf of ZOTEFOAMS.

ZOTEFOAMS MAKES NO WARRANTIES EXPRESS OR IMPLIED, EXCEPT TO THE EXTENT SET OUT IN THE CONDITIONS OF SALE, AND HEREBY SPECIFICALLY EXCLUDES ANY IMPLIED WARRANTY OF MERCHANTABILITY OR FITNESS FOR A PARTICULAR PURPOSE WITH RESPECT TO ANY GOODS, MATERIALS OR PRODUCTS DESCRIBED HEREIN.

| | |
|---|---|
| Zotefoams plc | Zotefoams Inc |
| 675 Mitcham Road | 55 Precision Drive |
| Croydon | Walton |
| Surrey | Kentucky |
| CR9 3AL | 41094 |
| United Kingdom | USA |
| Tel: +44 (0)20 8664 1600 | Tel: +1 859 371 4046, Free: (800) 362-8358 (US only) |
| Fax: +44 (0) 20 8664 1616 | Fax: +1 859 3714734 |
| E-mail: info@zotefoams.com | E-mail: customerserv@zotefoams.com |
| Internet: www.zotefoams.com | |

| | |
|---|---|
| KYNAR® is a registered trademark of ARKEMA ZOTEK® is a registered trademark of ZOTEFOAMS plc | |

| | | | | |
|---|---|---|---|---|
| P55 - Flame Retardant Double Coated Cloth Tape | | | Permacel/Nitto Denko PRINT | |
| | | | | **Request a quote** |
| **ADHESIVE TAPE FEATURES** | **GENERAL INFORMATION** | | | |
| • Std Roll Length: 25.00 yards | This tape is engineered to meet the stringent regulrements of the aviation industry. It is widely used for installing carpeting on interior floors and starways of commercial alteralt. P55 is heavy duty and ideal for commercial carpet installation to rough flooring. | | | |
| • Flame retardant | | | | |
| • High quick-stick and strong bond | PRODUCT CONSTRUCTION | | | |
| • Great for adverse environments | | Type | | Mil Thickness |
| | Backing | Uncoated Cloth | | |
| **ADHESIVE TAPE ADVANTAGES** | Adhesive (unwind) | Rubber | | |
| | Adhesive (liner) | Rubber | | |
| • Quick, easy and clean to use | Thickness (total) | | | 13.00 |
| • Cloth backing provides excellent strength and superior conformability | **PRIMARY PHYSICAL PROPERTIES** | | | |
| | | | Unwind Side | Liner Side |
| | Adhesion to Steel 180° Peel | | 125 00 oz/in | 125.00 oz/ln |
| **ADHESIVE TAPE APPLICATIONS** | Adhesive Activation | | Pressure | |
| | **SECONDARY PHYSICAL PROPERTIES** | | | |
| • Fastening automobile carpets | Water Resistant | | | Yes |
| • Splicing folls, plastics, metals, cloth or glass | UV Resistant | | | Yes |
| • Wherever flame retardant adhesive is a must | **THERMAL / ELECTRICAL PROPERTIES** | | | |
| • As an insulation blanket between exterior skins & interior walls | Minimum Application Temperature | | | 40°F |
| | Minimum Service Temperature | | | 0°F |
| | Flame Resistant | | | Yes |
| **ADHESIVE TAPE MARKETS SERVED** | Adhesive Tape and Foam Converting Services | | | |

- Industrial
- Automotive
- Aerospace

### ADHESIVE TAPE COLORS

- Black
- White
- The physical properties listed are typical values and are not to be considered as speciffications. Our suggestions for use are based on tests we believe to be relable. However, the purchaser must carry our the own tests to determine the suitability of the product for their internal use. Information is given in good faith, but without warranty.
- It is essential, as with all pressure sensitive tapes, that the surface which the tape is applied be clean, dry and free of grease and oll.
- Shelf life from date of manufacture is based on the product being stored at 70°F(21°C) / 50% relative humidity out of direct sunlight.
- Specification compliance is dynamic and should only be used as a general guide. Always confirm that the tape you are interested in currently complies with all specification requirements. Please verify that the product number that you select is avallable in the proper size and color to meet your specification.
   http://tapeinfo.com/TapeInfo/PrintDatasheet.aspx 24/11/2010

| |
|---|
| ZOTEK® High performance foams |
| ZOTEK® F OSU semi-rigid PVD F FOAMS |

ZOTEK® F OSU semi-rigid is closed cell foam of density 34 kg/m³ (2.1 pcf) made from KYNAR® PVDF (poly vinylidene fluoride) available In 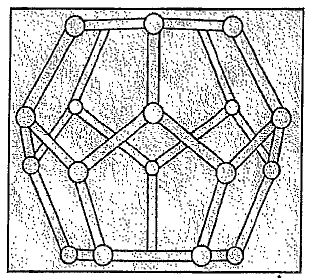 sheet form. ZOTEK® F OSU grades meet FAR 25.853(d) and exhibit exceptionally low heat release (OSU). This grade is ideal for interior soft trim in combination with leathers, textiles and decorative laminates including low FST cores for composites and divider panels and can be thermoformed Into simple and complex shapes. This datasheet provides typical values for the foam and does not constitute a specification.

| **Property** | **Test Method** | **Units** | **Typical Value** |
|---|---|---|---|
| **Density** | ISO 845 | Kg m⁻³ (pcf) | 34(2.1) |
| Maximum operating temperature | internal | °C (°F) | 155 (311) |
| **Compression stress-strain characteristics** | ISO 7214 | | |
| 25% compression | (1st compression) | kPa (psi) | >74 (>10.7) |
| **Tensile Strength** | ISO 1798 | kPa (Psi) | >417 (>60) |
| **Elongation** | ISO 1798 | % | >74 |
| **Tear Strength** | ISO 8067 | N m⁻¹ (lbf/in) | 823 (4.7) |
| **Compression set** | ASTM D3575 | | |
| (22hrs @ 50 %compression, 23°C (73°F), 1/2 hr recovery) | 25mm (1") cell-cell | % set | <50 |
| **Thermal Conductivity** | | | |
| Mean temperature of 10 °C (50°F) | ISO 8301 | Wm⁻¹ K⁻¹ (Btu in/ft².hr.°F) | 0.0321 (0.2224) |
| Mean temperature of 50 °C (122°F) | | Wm⁻¹ K⁻¹ (Btu in/ft².hr.°F) | 0.0370 (0.2564) |
| Mean temperature of 83 °C (181.4 °F) | | Wm⁻¹ K⁻¹ (Btu ln/ft².hr.°F) | 0.0407 (0.2820) |
| Flammability | | | |
| Heat Release | FAR/JAR/CS 25.853 (d) App F Pt IV(g) | 2 min. total HR (kWmin/m²) | 30.2 |
| | | Peak HR (kW/m²) (at 1") | 35.0 |
| Smoke Emission | FAR/JAR/CS 25.853 (d) App F Pt V(b) | Ds Max in 4 min (Flaming) | 8 |
| Smoke Emission | ABD0031 para 7.3.2. | Ds Max in 4 min (Flaming) | 8 |
| | | Ds Max in 4 min (Non-Flaming) | 7 |
| Toxic Gas Emission | ABD0031 para 7.4 | Pass at 25 mm (1") | |

| | | | |
|---|---|---|---|
| **OSU: The Ohio State University test method to determine the total and release rate of heat from materials, products, or assemblies during combustion* | | | |

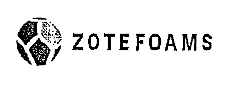

Date of issue: May 2010

### NOTES

### MAXIMUM OPERATING TEMPERATURE

The Maximum Operating Temperature is defined as that temperature which will typically cause a linear shrinkage of 5% after a 24 hr exposure period, using a sample of 100 x 100 x 25mm (4" x 4" x 1").

The degree of shrinkage varies with material type and density, temperature, exposure period, sample dimensions and cell size. Other temperatures may prove to be limiting depending on the particular application requirements.

### CREEP PERFORMANCE

PVDF resins typically exhibit excellent creep performance. However, data on the creep performance of the ZOTEK® F OSU semi-rigid foam is not available at this point in time.

### WATER VAPOUR PERMEABILITY

PVDF resins exhibit very low permeability to most gasses and liquids including water, however, data on the water vapour permeability of the ZOTEK® F OSU semi-rigid foam is not available at this point in time.

### CHEMICAL RESISTANCE

General guidelines for chemical resistance of PVDF resins are that they exhibit excellent resistance to a wide range of chemicals. They are resistant to attack from most Inorganic acids and alkalis, aliphatic and aromatic hydrocarbons, organic acids, alcohols and halogenated solvents. However, they are susceptible to attack from strong alkalis (i.e. pH >12) and strongly polar solvents (e.g. acetone, ethyl acetate, dimethylformamide, dimethylacetamide) .Foam performance may be slightly inferior to solid performance but will be a relative effect.

### EXCLUSION OF LIABILITY

Any information contained in this document is, to the best of the knowledge and belief of Zotefoams plc and of Zotefoams Inc. (together herein referred to as ZOTEFOAMS), accurate. Any liability on the part of ZOTEFOAMS or any subsidiary or holding company of ZOTEFOAMS for any loss, damage, costs or expenses directly or indirectly arising out of the use of such information or the use, application, adaptation or processing of any goods, materials or products described herein is, save as provided in ZOTEFOAMS' conditions of sale ("Conditions of Sale"), hereby excluded to the fullest extent permitted by law.

Where ZOTEFOAMS' goods or materials are to be used in conjunction with other goods or materials, it is the responsibility of the user to obtain from the manufacturers or suppliers of the other goods or materials all technical data and other properties relating to those other goods or materials. Save as provided in the Conditions of Sale no liability can be accepted in respect of the use of ZOTEFOAMS' goods or materials in conjunction with any other goods or materials.

Where ZOTEFOAMS' goods or materials are likely to come into contact with foodstuffs or pharmaceuticals, whether directly or indirectly, or are likely to be used in the manufacture of toys, prior written confirmation of compliance with relevant legislative or regulatory standards for those applications may be requested from ZOTEFOAMS, if appropriate. Save as provided in the Conditions of Sale no liability can be accepted for any damage, loss or injury directly or indirectly arising out of any failure by the user to obtain such confirmation or to observe any recommendations given by or on behalf of ZOTEFOAMS.

ZOTEFOAMS MAKES NO WARRANTIES EXPRESS OR IMPLIED, EXCEPT TO THE EXTENT SET OUT IN THE CONDITIONS OF SALE, AND HEREBY SPECIFICALLY EXCLUDES ANY IMPLIED WARRANTY OF MERCHANTABILITY OR FITNESS FOR A PARTICULAR PURPOSE WITH RESPECT TO ANY GOODS, MATERIALS OR PRODUCTS DESCRIBED HEREIN.

| | |
|---|---|
| Zotefoams plc | Zotefoams Inc |
| 675 Mitcham Road | 55 Precision Drive |
| Croydon | Walton |
| Surrey | Kentucky |
| CR9 3AL | 41094 |
| United Kingdom | USA |
| Tel: +44 (0)20 8664 1600 | Tel: +1 859 371 4046, Free: (800) 362-8358 (US only) |
| Fax: +44 (0) 20 8664 1616 | Fax: +1 859 371 4734 |
| E-mail: info@zotefoams.com | E-mail: customerserv@zotefoams.com |
| Internet: wwv.zotefoams.com | |

| | |
|---|---|
| KYNAR® is a registered trademark of ARKEMA ZOTEK® is a registered trademark of ZOTEFOAMS plc | |

## Claims

1. A passenger aircraft having an interior cabin which includes a panel (10,14) comprising a cabin bulkhead divider, toilet wall, galley wall, sidewall panel, dado panel, storage compartment panel or a headboard, and a a soft interior trim component (16) for covering the panel the component comprising a layer (24) of a soft fluoropolymer closed cell foam, a cover (40) attached to said layer and extending over the front of the trim component and attachment means (26,28,39) releasably attaching the component at its rear to the panel surface covered by the component, the attachment means having touch and close fastening means (26) providing a touch and close fastening between the component and a surface of the panel to be covered, the attachment means further including a fastening element (28) comprising a protuberance projecting from the trim component, and a female connector portion (39) on the panel in mating releasable engagement with one another.

2. An aircraft according to claim 1, in which the touch and close fastening means (26) comprises a pressure sensitive adhesive surface.

3. An aircraft according to claim 2, in which the adhesive surface is mounted on the back of the foam layer (24), so as to remain with the rest of the component when the latter is being removed.

4. An aircraft according to claim 2 or claim 3, in which the adhesive surface (26) is one side of a double sided adhesive tape, the other side of which is adhered to the back of the foam layer (24) or to an intervening material on the back of the foam layer.

5. An aircraft according to claim 4, in which the foam layer includes a recess for at least partially accommodating the tape (26).

6. An aircraft according to any of the preceding claims, in which the fastening element is one of a plurality of such elements (28-32).

7. An aircraft according to claim 6, in which the fastening elements (28-32) comprise clips or plugs.

8. An aircraft according to claim 7, in which the fastening elements (28-32) comprise fir tree clips.

9. An aircraft according to any of claims 6 to 8, in which the foam layer (24) includes recesses for accommodating the inboard ends of the fastening elements.

10. An aircraft according to any of the preceding claims, in which the foam layer (24) comprises a panel which is no more than 6mm thick.

## Patentansprüche

1. Passagierflugzeug, das eine Innenkabine aufweist, die ein Paneel (10, 14), das eine Kabinenschotttrennwand, eine Toilettenwand, eine Bordküchenwand, ein Seitenwandpaneel, ein Sockelpaneel, ein Stauraumpaneel oder eine Stirnwand umfasst, und eine weiche Innenverkleidungskomponente (16) zum Abdecken des Paneels umfasst, wobei die Komponente eine Lage (24) aus einem weichen Fluorpolymerschaum mit geschlossenen Zellen umfasst, wobei eine Abdeckung (40) an der Lage befestigt ist und sich über die Vorderseite der Verkleidungskomponente erstreckt und Befestigungseinrichtungen (26, 28, 39) die Komponente lösbar an dessen Rückseite an der durch die Komponente bedeckten Paneelfläche befestigen, wobei die Befestigungseinrichtungen eine Haftverschlussfixierungseinrichtung (26) aufweisen, die eine Haftverschlussfixierung zwischen der Komponente und einer Fläche des abzudeckenden Paneels vorsehen, wobei die Befestigungseinrichtungen ferner ein Fixierungselement (28), das eine Protuberanz umfasst, die von der Verkleidungskomponente vorsteht, und einen aufnehmenden Verbindungsabschnitt (39) am Paneel umfassen, die lösbar ineinandergreifen.

2. Flugzeug nach Anspruch 1, wobei die Haftverschlussfixierungseinrichtung (26) eine druckempfindliche Klebefläche umfasst.

3. Flugzeug nach Anspruch 2, wobei die Klebefläche an der Rückseite der Schaumlage (24) angebracht ist, um an der restlichen Komponente zu verbleiben, wenn diese entfernt wird.

4. Flugzeug nach Anspruch 2 oder Anspruch 3, wobei die Klebefläche (26) eine Seite eines doppelseitigen Klebebands ist, dessen andere Seite an der Rückseite der Schaumlage (24) oder an einem Zwischenmaterial auf der Rückseite der Schaumlage angeklebt ist.

5. Flugzeug nach Anspruch 4, wobei die Schaumlage eine Aussparung umfasst, um das Klebeband (26) zumindest teilweise aufzunehmen.

6. Flugzeug nach einem der vorstehenden Ansprüche, wobei das Fixierungselement eines von mehreren derartigen Elementen (28-32) ist.

7. Flugzeug nach Anspruch 6, wobei die Fixierungselemente (28-32) Klammern oder Stopfen umfassen.

8. Flugzeug nach Anspruch 7, wobei die Fixierungselemente (28-32) Tannenbaumclips umfassen.

9. Flugzeug nach einem der Ansprüche 6 bis 8, wobei die Schaumlage (24) Aussparungen umfasst, um die inneren Enden der Fixierungselemente aufzunehmen.

10. Flugzeug nach einem der vorstehenden Ansprüche, wobei die Schaumlage (24) ein Paneel umfasst, das stärker als 6 mm ist.

## Revendications

1. Avion de passagers ayant une cabine intérieure qui comprend un panneau (10, 14) comprenant un séparateur de cloison de cabine, une paroi de toilettes, une paroi de cuisine, un panneau de paroi latérale, un panneau dado, un panneau de compartiment de rangement ou un bac, et un composant de garniture (16) intérieur souple pour recouvrir le panneau, le composant comprenant une couche (24) de mousse fluoropolymère souple à cellules fermées, un revêtement (40) fixé à ladite couche et s'étendant sur l'avant du composant de garniture et un moyen de fixation (26, 28, 39) fixant de manière amovible le composant au niveau de son arrière à la surface de panneau couverte par le composant, le moyen de fixation ayant un moyen de fixation à accrochage par contact (26) fournissant une fixation à accrochage par contact entre le composant et une surface du panneau à couvrir, le moyen de fixation comprenant en outre un élément de fixation (28) comprenant une protubérance faisant saillie du composant de garniture, et une partie de connecteur femelle (39) sur le panneau en prise d'accouplement amovible l'un avec l'autre.

2. Avion selon la revendication 1, le moyen de fixation à accrochage par contact (26) comprenant une surface adhésive sensible à la pression.

3. Avion selon la revendication 2, la surface adhésive étant montée sur le dos de la couche de mousse (24), de sorte à rester avec le reste du composant lorsque ce dernier est retiré.

4. Avion selon la revendication 2 ou 3, la surface adhésive (26) étant une face d'un ruban adhésif double face, dont l'autre face est collée au dos de la couche de mousse (24) ou sur un matériau intermédiaire sur le dos de la couche de mousse.

5. Avion selon la revendication 4, la couche de mousse comprenant un évidement pour recevoir au moins partiellement le ruban (26).

6. Avion selon l'une quelconque des revendications précédentes, l'élément de fixation étant l'un d'une pluralité de tels éléments (28-32).

7. Avion selon la revendication 6, les éléments de fixation (28-32) comprenant des attaches ou des fiches.

8. Avion selon la revendication 7, les éléments de fixation (28-32) comprenant des attaches en forme de sapin.

9. Avion selon l'une quelconque des revendications 6 à 8, la couche de mousse (24) comprenant des évidements destinés à recevoir les extrémités intérieures des éléments de fixation.

10. Avion selon l'une quelconque des revendications précédentes, la couche de mousse (24) comprenant un panneau qui n'a pas plus de 6 mm d'épaisseur.
